**Europäisches Patentamt**

**European Patent Office**

**Office européen des brevets**

(19)

(11) Publication number: **0 041 275**

**A1**

(12) **EUROPEAN PATENT APPLICATION**

(21) Application number: **81104275.3**

(22) Date of filing: **03.06.81**

(51) Int. Cl.³: **B 60 K 11/08**
**F 16 B 41/00**

(30) Priority: **03.06.80 JP 77041/80**

(43) Date of publication of application:
**09.12.81 Bulletin 81/49**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken(JP)**

(72) Inventor: **Kurokawa, Yoshihisa**
**3-68, Oppama-higashi-cho**
**Yokosuka-shi Kanagawa-ken(JP)**

(72) Inventor: **Inamoto, Hiroshi**
**917-43, Fukaya-cho**
**Totsuka-ku Yokohama-shi Kanagawa-ken(JP)**

(72) Inventor: **Maeda, Akira**
**37, Kikuna-cho**
**Kouhoku-ku Yokohama-shi Kanagawa-ken(JP)**

(74) Representative: **Ter Meer-Müller-Steinmeister**
**Patentanwälte**
**Triftstrasse 4**
**D-8000 München 22(DE)**

(54) **Radiator grille support arrangement of automotive vehicle.**

(57)  A radiator grille support arrangement of an automotive vehicle, comprising a radiator core support member (3) forming part of the body structure of the vehicle, a front radiator grille structure (1) positioned in front of the radiator core support member (3), and a plurality of locking fastener elements (8) fitted to the radiator grille structure (1) and the radiator core support member (3) for having the grille structure (1) detachably secured to the radiator core support member (3), wherein at least one of the locking fastener elements (8), is shaped and/or the radiator grille structure (1) is configured in such a manner that the particular one of the fastener elements (8) can not be removed from the radiator core support member (3) from the outside of the radiator grille structure (1) when the engine hood member is locked in a position closing the engine compartment (5) behind the radiator core support member (3).

FIG. 4

D E S C R I P T I O N

The present invention relates to a radiator grille support arrangement of an automotive vehicle and, more particularly, to a vehicular radiator grille support arrangement provided with antitheft means.

In accordance with the present invention, there is provided a radiator grille support arrangement of an automotive vehicle having a body structure, a front engine compartment formed in the body structure and an engine hood structure to be locked in and unlocked from a position closing the engine compartment, comprising a radiator core support member forming part of the body structure of the vehicle and formed with a plurality of non-circular openings, a radiator grille structure positioned in front of the radiator core support member and formed with a plurality of non-circular openings arranged respectively in conjunction with the non-circular openings in the radiator core support member, and a plurality of locking fastener elements each fitted to the radiator grille structure through each of the non-circular openings in the grille structure and to the radiator core support member through each of the non-circular openings in the support member for detachably securing the radiator grille structure to the radiator core support member, wherein at least one of the radiator grille structure and at least one of the locking fastener elements is provided with antitheft means for prohibiting the aforesaid one of the locking fastener elements from being removed from the radiator core support member from the outside of the radiator grille structure when the engine hood structure is locked in the above mentioned position thereof.

The aforesaid one of the locking fastener elements may comprise a head portion shaped to be passable through one of the non-circular openings in the radiator grille structure when the particular locking fastener element assumes a predetermined angular position with respect to the radiator grille structure and to be secured to the radiator grille structure when the particular locking fastener element is turned through a predetermined angle from the above mentioned predetermined angular position with respect to the grille structure, a shank portion longitudinally extending from the head portion and at least a pair of pliable arm portions turned back from the leading end of the shank portion and projecting into the engine compartment through one of the non-circular openings in the radiator core support member, the head portion projecting forwardly from the radiator grille support structure and being devoid of any recess capable of receiving any manipulating implement therein, the above mentioned antitheft means being constituted by the head portion.

As an alternative to or in combination with such antitheft means, the antitheft means of the radiator grille support arrangement according to the present invention may comprise at least one wall member fast on the radiator grille structure and located in front of said one of the locking fastener element.

In an embodiment of the radiator grille support arrangement including such a wall member, the radiator grille structure comprises at least two horizontal beams vertically spaced apart from each other and at least one mounting stay portion bridging the two horizontal beams and formed with the aforesaid one of the non-circular openings in the radiator grille structure, the above mentioned wall member being constituted by a horizontally elongated strip securely attached to one of the two horizontal beams and vertically projecting toward the other of the beams for partially located in front of the aforesaid one of the locking fastener element.

In another embodiment of the radiator grille support arrangement including the above mentioned wall member, the radiator grille structure comprises at least two horizontal beams vertically spaced apart from each other and at least one mounting stay portion bridging the two horizontal beams and formed with the aforesaid one of the non-circular openings in the radiator grille structure, the wall member being constituted by a decorative member attached to the two horizontal beams and at least partially located in front of the aforesaid one of the locking fastener elements.

As an alternative, the wall member of a radiator grille support arrangement embodying the present invention may be constituted by a wall portion of said radiator grille structure.

In still another embodiment of the radiator grille support arrangement according to the present invention, the aforesaid one of the locking fastener elements comprises a head portion shaped to be passable through one of the non-circular openings in the radiator grille structure when the particular locking fastener element assumes a predetermined angular position with respect to the radiator grille structure and to be secured to the radiator grille structure when the particular locking fastener element is turned a predetermined angle from the predetermined angular position thereof with respect to the radiator grille structure, a shank portion longitudinally extending from the head portion and at least a pair of pliable arm portions turned back from the leading end of the shank portion and projecting into the engine compartment through one of the non-circular openings in the radiator core support member, the head portion projecting forwardly from the radiator grille structure and being formed with a straight groove capable of receiving therein a manipulating implement having a flat tip portion, the above mentioned groove extending vertically when aforesaid one of the locking fastener element is turned through the above mentioned predetermined angle from the aforesaid predetermined angular position thereof with respect to the radiator grille.

Drawbacks of a prior-art radiator grille support arrangement and the details of the radiator grille support arrangement according to the present invention will be understood from the following description taken in conjunction with the accompanying drawings in which like reference numerals and characters designate similar or corresponding members, elements and structures and in which:

Fig. 1 is a front view of an example of a prior-art radiator grille support arrangement of the nature to which the present invention appertains;

Fig. 2 is a fragmentary cross sectional view taken on line II-II in Fig. 1;

Fig. 3 is a front view of a first embodiment of the radiator grille support arrangement according to the present invention;

Fig. 4 is a fragmentary cross sectional view taken on line IV-IV in Fig. 3;

Fig. 5 is a fragmentary perspective view showing part of the arrangement shown in Fig. 3;

Fig. 6 is a front view of a second embodiment of the radiator grille support arrangement according to the present invention;

Fig. 7 is a fragmentary cross sectional view taken on line VII-VII in Fig. 6;

Fig. 8 is a fragmentary cross sectional view taken on line VIII-VIII in Fig. 6;

Fig. 9 is a front view of a third embodiment of the radiator grille support arrangement according to the present invention;

Fig. 10 is a fragmentary cross sectional view taken on line X-X in Fig. 8;

Fig. 11 is a fragmentary cross sectional view showing part of a fourth embodiment of the radiator grille support structure according to the present invention;

Fig. 12 is a front view of a fifth embodiment of the radiator grille support arrangement according to the present invention;

Fig. 13 is a fragmentary cross sectional view taken on line XIII-XIII in Fig. 12;

Fig. 14 is a perspective view of a locking fastener element included in the embodiment of Fig. 12; and

Fig. 15 is a fragmentary cross sectional view showing, to an enlarged scale, a portion shown enclosed in a circle XV in Fig. 13.

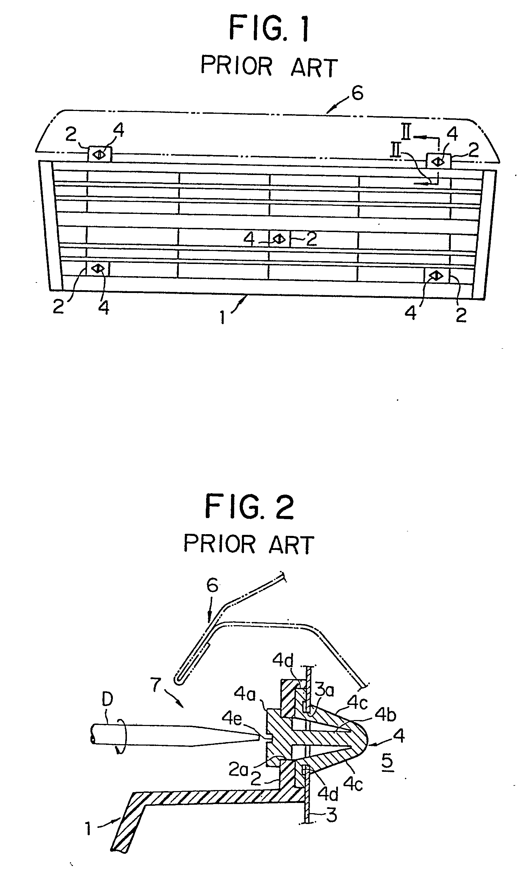

Description will be first made with reference to Figs. 1 and 2 which show a prior-art radiator grille arrangement of an automotive vehicle. In the prior-art radiator grille support arrangement herein shown, a radiator grille structure 1 has a plurality of mounting stay portions 2 disposed at suitable locations on the grille structure 1. The grille structure 1 is attached to a radiator grille support member 3 by means of locking fastener elements 4 detachably fitted to the individual stay portions 2, respectively, and to the radiator core support member 3. The radiator core support member 3 forms part of the body structure of the automotive vehicle and is positioned at the front end of a front engine compartment 5 defined in part by the vehicle body structure and in part by an engine hood structure 6. The engine hood structure 6 has a front end upwardly spaced apart from an upper end portion of the radiator grille structure 1 so that a horizontal gap 7 is formed between the upper end portion of the grille structure 1 and the front end of the engine hood structure 6 as shown in Fig. 2.

The mounting stay portions 2 of the radiator grille structure 1 are respectively formed with non-circular openings 2a and, likewise, the radiator core support member 3 is formed with a plurality of non-circular openings 3a. The non-circular openings 3a in the radiator core support member 3 are respectively aligned with the non-circular openings 2a in the mounting stay portions 2.

Each of the locking fastener elements 4 is shaped generally in the form of an anchor and, thus, has a front head portion 4a, a shank portion 4b longitudinally extending rearwardly from the head portion 4a, a pair of arm portions 4c turned back forwardly in a generally V-shaped configuration from the rear end of the shank portion 4b, and a pair of fluke portions 4d sidewise projecting from the front ends of the arm portions 4c, respectively. The front head portion 4a is slotted with a groove 4e for use with a flat-tipped screwdriver which is partially shown at D in Fig. 2.

For mounting the radiator grille structure 1 on the radiator core support member 3 by the use of the fastener elements 4 each configured as above described, each of the fastener elements 4 is first fitted to each of the mounting stay portions 2 of the grille structure 1 by passing the head portion 4a of the fastener element 4 through the non-circular opening 2a in the stay portion 2 from the rear side toward the front side of of stay portion 4a until the fluke portions 4d of the fastener element 4 are forced against the rear face of the stay portion 2. After the fastener elements 4 are thus fitted to the radiator grille structure 1, each of the fastener elements 4 is turned about the center axis of the head portion 4a through the non-circular opening 2a in the mounting stay portion 2 by the use of a screwdriver D fitted into the groove 4e in the head portion 4a of the fastener element 4. When the fastener element 4 is turned through a predetermined angle through the non-circular opening 2a in the stay portion 2, the fastener element 4 is secured to the stay portion 2 and is kept from being disloged or removed from the radiator grille structure 1 with its shank portion 4b and arm portions 4c projecting rearwardly from the stay portion 2. Each of the fastener elements 4 is then fitted to the radiator core support member 3 by forcing the arm portions 4c of the fastener element 4 through each of the non-circular openings 3a in the support member 3 until the fluke portions 4d are forced against the front face of the support member 3 as shown. Each of the fastener elements 4 is constructed of an elastic material so that the arm portions 4c of the fastener element 4 are allowed to pass through the opening 3a by elastic deformation of the arm portions 4c toward the shank portion 4b. After the arm portions 4c are passed through the opening 3a in the radiator core support member 3, the particular portions are elastically forced against to the edge of the support member 3 defining the opening 3a with the edge portion of the support member 3 closely interposed between each of the arm portions 4c and each of the fluke portions 4d as shown in Fig. 2.

In order to disassemble the radiator grille structure 1 from the radiator core support member 3 having the grille structure 1 thus mounted thereon by means of the locking fastener element 4, it is only necessary to have each of the locking fastener elements 4 turned back about the center axis of the head portion 4a by the use of a screwdriver D until the head portion 4a resumes the angular position ready to be passed through the non-circular opening 1a in the radiator grille structure 1. The radiator grille structure 1 can be removed from the fastener elements 4 and accordingly from the radiator core support member 3 simply by pulling the grille structure 1 forwardly away from the support member 3 when all the fastener elements 4 are turned into such angular positions.

One of the drawbacks inherent in the prior-art radiator grille support arrangement of the nature hereinbefore described is that the radiator grille structure 1 and some of the important parts and units in the engine compartment 5 are in danger of theft because of the fact that the radiator grille structure 1 can be too easily removed from the radiator core support member 3 simply by the use of a screwdriver or the like even when the engine hood structure 6 is locked in a position closing the engine compartment 5.

The present invention contemplates provision of an improved radiator grille support arrangement which will eliminate such a drawback in a prior-art radiator grille support arrangement and thus proposes to provide antitheft means in a radiator grille support arrangement of an automotive vehicle.

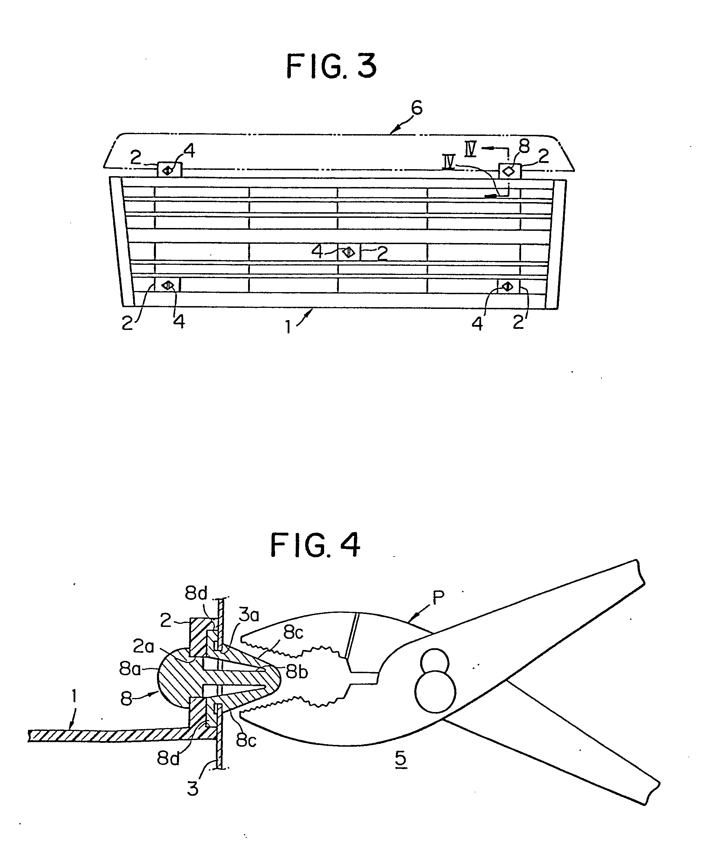

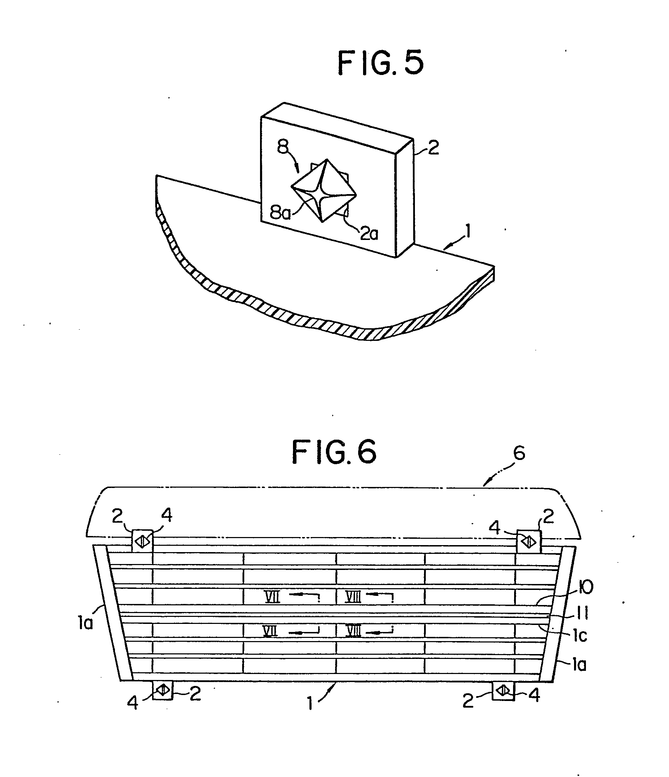

Figs. 3 to 5 of the drawings show a first embodiment of the radiator grille support arrangement according to the present invention. The embodiment herein shown is largely similar to the prior-art radiator grille support arrangement of Figs. 1 and 2 except for the configuration of at least one of the locking fastener elements, the particular one of the fastener elements being denoted by reference numeral 8. As will be seen from Fig. 4, the locking fastener element 8 is similar to the other fastener elements 4 and thus has a front head portion 8a, a shank portion 8b longitudinally extending rearwardly from the front head portion 8a, a pair of pliable arm portions 8c turned back forwardly in a generally V-shaped configuration from the rear end of the shank portion 8b, and a pair of fluke portions 8d which sidewise project from the front ends of the arm portions 8c, respectively. In contrast to each of the fastener elements 4, the fastener element 8 is provided with antitheft means constituted by the head portion 8a which is devoid of a slot or groove and, for this reason, can not be worked on by a screwdriver or the like at the head portion 8a thereof. In Fig. 5 of the drawings, the head portion 8a of the fastener element 8 is shown as being in the form of a truncated, generally pyramid having plain surfaces by way of example.

The fastener element 8 thus configured is fitted to the radiator grille structure 1 in a manner similar to the manner in which each of the fastener elements 4 in the prior-art radiator grille support arrangement is fitted to the radiator grille structure 1 as hereinbefore described with reference to Figs. 1 and 2. The fastener element 8 thus fitted to the radiator grille structure 1 is then fitted to the radiator core support member 3 by gripping the arm portions 8c of the fastener element 8 by the use of a suitable gripping implement such as for example a plier or a spanner P and pulling the fastener element 8 forwardly through the non-circular opening 3a in the radiator core support member 3. When the engine hood structure 6 is locked in a position closing the engine compartment 5, the arm portions 8c of the fastener element 8 are inaccessible from the outside of the vehicle body structure so that the fastener element 8 and accordingly the radiator grille structure 1 can not be detached from the radiator core support member 3 from the outside of the radiator grille structure 1.

While it has been assumed that only one of the fastener elements 4 is constituted by the fastener element 8 in the arrangement of Figs. 3 to 5, two or more of the fastener elements 4 may be constituted each by such a fastener element 8 if desired.

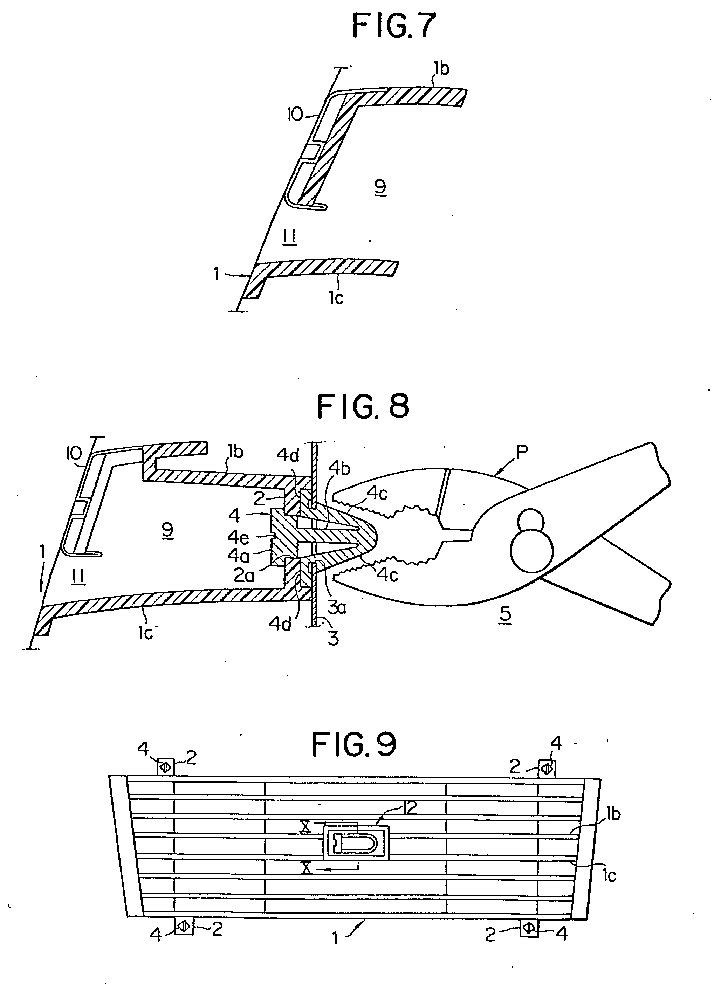

Figs. 6 to 8 of the drawings show a second embodiment of the radiator grille support arrangement according to the present invention. In the arrangement of Fig. 6, the radiator grille structure 1 is shown comprising a pair of vertical side frame members 1a and a number of horizontal beams extending between the side frame members. The horizontal beams are vertically spaced apart from each other and are securely connected at their opposite lateral ends to the side frame members 1a. The radiator grille structure 1 further comprises a plurality of mounting stay portions 2 each of which is formed between adjacent two of these horizontal beams. In Figs. 7 and 8 of the drawings, adjacent two of the horizontal beams of the radiator grille structure 1 thus constructed are shown consisting of upper and lower horizontal beams 1b and 1c between which is formed one of the mounting stay portions 2. The upper and lower horizontal beams 1b and 1c are vertically spaced apart from each other and have a horizontal groove 9 therebetween.

In the embodiment shown in Figs. 6 to 8, all the locking fastener elements 4 having the radiator grille structure 1 attached to the radiator core support member 3 are shaped similarly to the locking fastener elements 4 in the prior-art radiator grille support arrangement shown in Figs. 1 and 2. The fastener element 4 shown in Fig. 8 thus comprises a slotted or grooved head portion 4a, a shank portion 4b, a pair of arm portions 4c and a pair of fluke portions 4d similarly to its counterpart shown in Fig. 2. The mounting stay portion 2 of the grille structure 1 is formed with a non-circular opening 2a and, likewise, the radiator core support member 3 is formed with a non-circular opening 3a as in the prior-art arrangement shown in Figs. 1 and 2.

In the radiator grille support arrangement illustrated in Figs. 6 to 8, a horizontally elongated strip member or molding 10 is securely attached along its upper edge to the upper horizontal beam 1b and at its opposite lateral ends to the vertical side frame members 1a of the radiator grille structure 1. The strip member 10 projects downwardly from the upper horizontal beam 1b toward the lower horizontal beam 1c and terminates short of the lower beam 1c, forming a gap 11 between the lower horizontal beam 1c and the lower end of the strip member or molding 10. The groove 9 formed between the upper and lower horizontal beams 1b and 1c is thus partially closed by the strip member or molding 10 so that at least one of the locking fastener elements 4 securing the radiator grille structure 1 to the radiator core support member 3 is concealed behined the strip member or molding 10. In this fashion, the strip member or molding 10 serves as antitheft means effective to restrict or practically prohibit access of a screwdriver or any other manipulating implement to the head portion 4a of the particular fastener element or elements 4 concealed behind the the strip member or molding 10. Thus, the radiator grille structure 1 can not be detached from the radiator core support member 3 of the vehicle body structure insofar as the engine hood structure 6 is locked in the position closing the engine compartment 5.

In order to have the radiator grille structure 1 secured to the radiator core support member 3 to realize the embodiment of Figs. 6 to 8, the fastener elements 4 except for the fastener element or each of the fastener elements located at the rear of the strip member or molding 10 are fitted to the radiator grille structure 1 each in a manner described in connection with the prior-art arrangement shown in Figs. 1 and 2, viz., by the use of a screwdriver. The fastener element 4 or each of the fastener elements 4 to be located at the rear of the strip member or molding 10 is fitted to the radiator grille structure 1 by gripping the arm portions 4c of the fastener element 4 by a plier or spanner P and turning the fastener element 4 with respect to the stay portion 2 of the grille structure 1 by the plier or spanner ). Each of the fastener elements 4 thus fitted securely to the radiator grille structure 1 are then fitted to the radiator core support member 3 each in a manner described in connection with the prior-art arrangement of Figs. 1 and 2. For disassembly of the radiator grille 1 from the radiator core support member 3 having the grille structure 1 thus secured thereto, the fastener element 4 or each of the fastener elements 4 concealed behind the strip member or molding 10 is detached from the radiator core support member 3 by gripping the arm portions 4c of the fastener element 4 by the plier or spanner P in the engine compartment 5 and pressing the fastener element 4 by the plier or spanner P for passing the fastener element 4 forwardly through the non-circular opening 3a in the radiator core support member 3.

While it has been described that the horizontal strip member or molding 10 is attached to the upper horizontal beam 1b of the radiator grille structure 1 in the embodiment of Figs. 6 to 8, such a member may be secured to the lower horizontal beam 1c of the grille structure 1 so as to form a gap between the upper horizontal beam 1b and the upper end of the strip member or molding though not shown in the drawings.

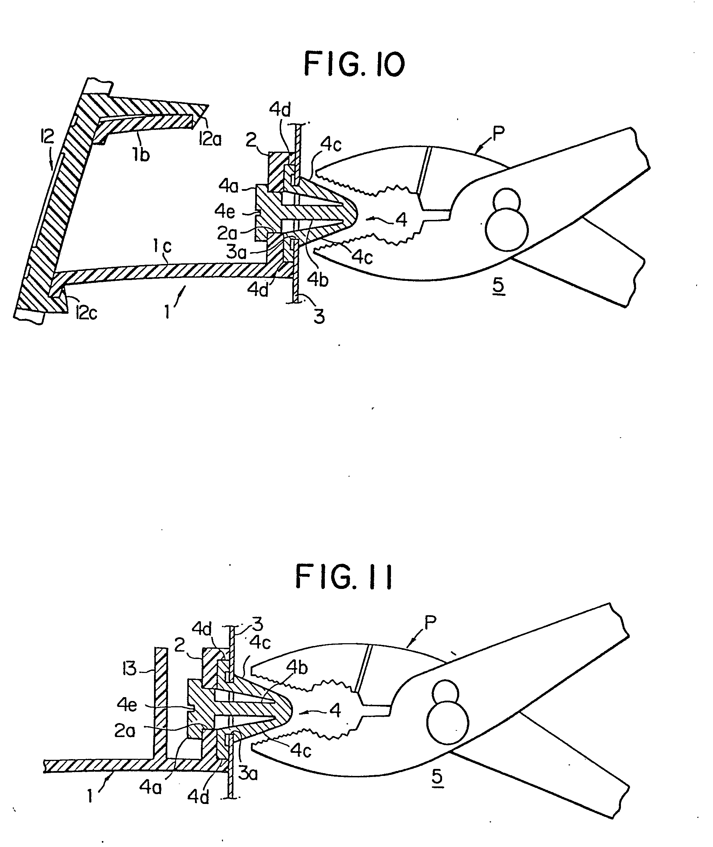

Figs. 9 and 10 of the drawings show a third embodiment of the radiator grille support arrangement according to the present invention. In the arrangement of Figs. 9 and 10, the radiator grille structure 1 is shown comprising, in addition to the side frame members and horizontal beams, a decorative member 12 attached to two of the horizontal beams of the radiator grille structure 1, the particular two horizontal beams being shown consisting of upper and lower horizontal beams 1b and 1d. The decorative member 12 may be constituted by an ornament or an emblem and is shown in Fig. 10 as having upper and lower pawl portions 12a and 12b fitted to the upper and lower horizontal beams 1b and 1c, respectively, of the radiator grille structure 1. Each of the locking fastener elements 4 used in the embodiment of Figs. 9 and 10 is similar in shape to each of the locking fastener elements 4 in the prior-art arrangement illustrated in Figs. 1 and 2. In the arrangement shown in Figs. 9 and 10, the locking fastener element 4 located at the rear of the decorative member 12 thus attached to the radiator grille structure 1 is concealed behind the decorative member 12 so that the decorative member 12 serves as antitheft means effective to prohibit access of a screwdriver or any other manipulating implement to the head portion 4a of the particular fastener element 4 when the engine hood structure 6 is locked in the position closing the engine compartment 5. The fastener element 4 concealed by the decorative member 12 can be fitted to the radiator grille structure 1 and detached from the radiator core support member 3 by the use of a plier or spanner P in a manner described in connection with the embodiment of Figs. 6 to 8.

Fig. 11 of the drawings shows a fourth embodiment of the radiator grille support arrangement according to the present invention. In the arrangement of Fig. 11, each of the locking fastener elements is also assumed to be similar in shape to each of the locking fastener elements 4 used in the prior-art arrangement of Fig. 1 and 2.

In the radiator grille support arrangement illustrated in Fig. 11, the radiator grille structure 1 has at least one obstructive wall portion 13 upstanding from one of the horizontal beams of the radiator grille structure 1. The obstructive wall portion 13 is located in front of at least one of the locking fastener elements 4 securing the radiator grille structure 1 to the radiator core support member 3. Thus, the wall portion 13 of the radiator grille structure 1 serves as antitheft means effective to hinder access of a screwdriver or any other manipulating implement to the head portion 4a of the fastener element or elements 4 located at the rear of the wall portion 13 when the engine hood structure is locked in a position closing the engine compartment 5. The fastener element 4 thus concealed behind the wall portion 13 can be fitted to the radiator grille structure 1 and detached from the radiator core support member 3 by the use of a plier or spanner P.

The embodiment of Fig. 11 may be modified in such a manner that the obstructive wall portion 13 of the radiator grille structure 1 depends downwardly from one of the horizontal beams of the grille structure 1.

In each of the embodiments illustrated in Figs. 6 to 11, the locking fastener element or each of the locking fastener elements provided with the antitheft means may be replaced with a locking fastener element having a head portion devoid of a groove or slot similarly to the locking fastener element 8 used in the embodiment of Figs, 6 to 8.

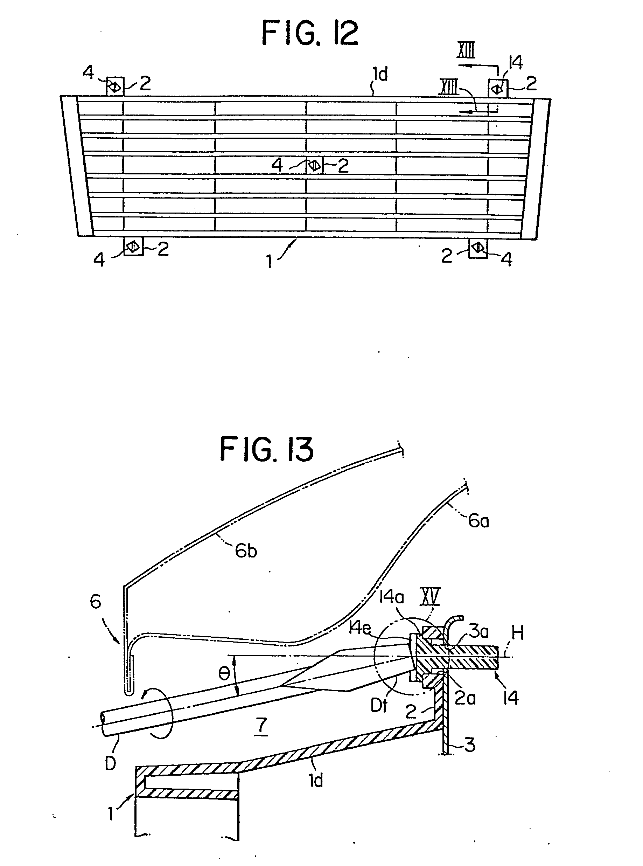

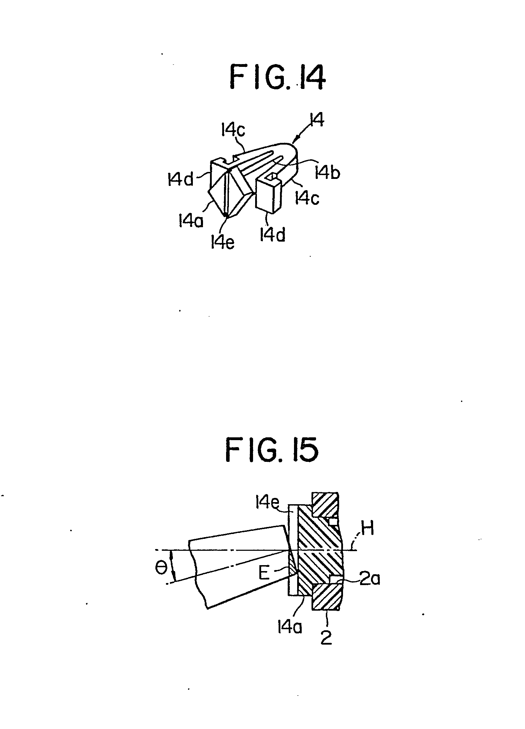

Turning to Figs. 12 to 15 of the drawings, there is shown a fifth embodiment of the radiator grille support arrangement according to the present invention. In the embodiment herein shown, at least one of the locking fastener elements securing the radiator grille structure 1 to the radiator core support member 3 is constituted by a locking fastener element 14 which is different in shape from the other locking fastener elements 4. As will be best seen from Fig. 14, the particular locking fastener element 14 comprises a front head portion 14a, a shank portion 14b longitudinally extending rearwardly from the head portion 14a, a pair of pliable arm portions 14c turned back forwardly in a generally V-shaped configuration from the rear end of the shank portion 14b, and a pair of fluke portions 14d projecting sidewise from the front ends of the arm portions 14c, respectively. The head portion 14a is formed with a straight slot or groove 14e extending at an angle predetermined with respect to the shape of the non-circular opening 2a in the mounting stay portion 2 of the radiator grille structure 1 in such a manner that the straight groove 14e extends vertically when the fastner element 14 is fitted to the stay portion 2 and is turned into an angular position secured to the stay portion 2. In the arrangement shown in Figs. 12 to 15, the locking fastener element 14 and the non-circular opening 2a in the mounting stay portion 2 of the radiator grille structure 1 are designed so that the head portion 14a of the fastener element 14 is allowed to pass through the non-circular opening 2a when the fastener element 14 assumes a position having the arm portions 14c and fluke portions 14d located above and below the shank portion 14b of the fastener element 14. The fastener element 14 is secured to the stay portion 2 when turned 90 degrees from such an angular position with respect to the stay portion 2. The groove 14e in the head portion 14a of such a locking fastener element 14 extends vertically when the fastener element 14 is turned through 90 degrees from such an angular position into an angular position having the arm portions 14c and fluke portions 14d on a horizontal plane, as will be clearly seen from Fig. 14.

In the arrangement of Figs. 12 to 15, furthermore, the mounting stay portion 2 having the locking fastener element 14 fitted thereto is formed as part of the uppermost one of the horizontal beams of the radiator grille structure 1, the particular one of the beams being designated by 1d. Thus, the locking fastener element 14 fitted to the particular stay portion 2 of the radiator grille structure 1 is located immediately below the engine hood structure 6. The engine hood structure 6 is herein shown as being composed of an inner panel member 6a and an outer panel member 6b. The inner panel member 6a is spaced apart upwardly from the uppermost horizontal beam 1d of the radiator grille structure 1 so that a horizontal gap is formed between the beam 1d and the panel member 6a as indicated at 7 in Fig. 13. The non-circular opening 2a in the mounting stay portion 2 of the uppermost horizontal beam 1d is located so that a screwdriver D having a flat tip portion Dt is inclined at an approximately predetermined angle θ from a horizontal plane H when the screwdriver D is permitted to have its flat tip portion Dt received in the straight groove 14e in the head portion 14d of the locking fastener element 14 with the engine hood structure 6 held in the position closing the engine compartment 5 as shown in Fig. 13 and partially to an enlarged scale in Fig. 15. When the engine hood structure 6 is locked in the position closing the engine compartment 5, the screwdriver D inserted into the horizontal gap 7 between the horizontal beam 1d of the radiator grille structure 1 and the inner panel member 6a of the engine hood structure 6 is allowed to have its flat tip portion Dt received only partially in the groove 14e in the head portion 14a of the locking fastener element 14 as indicated at E in Fig. 15 and is not enabled to turn the fastener element 14 with respect to the mounting stay portion 2 of the radiator grille structure 1.

It will be apparent that the locking fastener element 14 in the arrangement of Figs. 12 to 15 may be used for any of the mounting stay portions 2 each formed between any two of the horizontal beams of the radiator grille structure 1.

PATENT CLAIMS

1. A radiator grille support arrangement of an automotive vehicle having a body structure, a front engine compartment formed in the body structure and an engine hood structure to be locked in and unlocked from a position closing the engine compartment, comprising:

a radiator core support member forming part of the body structure of the vehicle and formed with a plurality of non-circular openings,

a radiator grille structure positioned in front of the radiator core support member and formed with a plurality of non-circular openings arranged respectively in conjunction with the non-circular openings in the radiator core support member, and

a plurality of locking fastener elements each fitted to the radiator grille structure through each of the non-circular openings in the grille structure and to the radiator core support member through each of the non-circular openings in the support member for detachably securing the radiator grille structure to the radiator core support member,

wherein at least one of the radiator grille structure (1) and at least one of the locking fastener elements (4,14) is provided with antitheft means for prohibiting said one of the locking fastener elements from being removed from the radiator core support member (3) from the outside of the radiator grille structure when said engine hood structure (6) is locked in said position thereof.

2. A radiator grille support arrangement as set forth in claim 1, in which said one of the locking fastener elements (4) comprises a head portion (4a) shaped to be passable through one of said non-circular openings (2a) in the radiator grille structure (1) when the particular locking fastener element assumes a predetermined angular position with respect to the radiator grille structure and to be secured to the radiator grille structure when the particular locking fastener element is turned through a predetermined angle from said predetermined angular position with respect to the grille structure, a shank portion (4b) longitudinally extending from said head portion and at least a pair of pliable arm portions (4c) turned back from the leading end of the shank portion and projecting into said engine compartment through one of said non-circular openings in said radiator core support member, said head portion projecting forwardly from the radiator grille support structure and being devoid of any recess capable of receiving any manipulating implement therein, said antitheft means being constituted by said head portion (4a).

3. A radiator grille support arrangement as set forth in claim 1 or 2, in which said antitheft means comprises at least one wall member (10,12,13) fast on said radiator grille structure and located in front of said one of the locking fastener elements (4).

4. A radiator grille support arrangement as set forth in claim 3, in which said radiator grille structure comprises at least two horizontal beams (1b, 1c) vertically spaced apart from each other and at least one mounting stay portion (2) bridging the two horizontal beams and formed with said one of the non-circular openings (2a) in said radiator grille structure, said wall member being constituted by a horizontally elongated strip (10) securely attached to one of said two horizontal beams and vertically projecting toward the other of the beams for partially located in front of said one of the locking fastner elements.

5.    A radiator grille support arrangement as set forth in claim 3, in which said radiator grille structure comprises at least two horizontal beams (1b,1c) vertically spaced apart from each other and at least one mounting stay (2) portion bridging the two horizontal beams and formed with said one of the non-circular openings in the radiator grille structure, said wall member being constituted by a decorative member (12) attached to said two horizontal beams and at least partially located in front of said one of the locking fastener elements.

6.    A radiator grille support arrangement as set forth in claim 3, in which said wall member is constituted by a wall portion (13) of said radiator grille structure.

7.    A radiator grille support arrangement as set forth in claim 1, in which said one of the locking fastener elements (14) comprises  head portion shaped to be passable through one of said non-circular openings in the radiator grille structure when the particular locking fastener element assumes a predetermined angular position with respect to the radiator grille structure and to be secured to the radiator grille structure when the particular locking fastener element is turned a predetermined angle from said predetermined angular position thereof with respect to the radiator grille structure, a shank portion longitudinally extending from said head portion and at least a pair of pliable arm portions turned back from the leading end of the shank portion and projecting into said engine compartment through one of said non-circular openings in said radiator core support member, said head portion projecting forwardly from said radiator grille structure and being formed with a straight groove capable of receiving therein a manipulating implement having a flat tip portion, said groove extending vertically when said one of the locking fastener elements is turned through said predetermined angle from said predetermined angular position thereof with respect to the radiator grille structure.

8.    A radiator grille support arrangement as set forth in claim 7, in which said radiator grille structure has a horizontal beam (1d) positioned immediately  below said engine hood structure when the engine hood structure is held in said position thereof and at least one mounting stay portion (2) projecting  from said horizontal beam toward said engine hood structure and formed with said one of the non-circular openings in the radiator grille structure.

# FIG. 1
## PRIOR ART

# FIG. 2
## PRIOR ART

# FIG. 3

# FIG. 4

# FIG. 5

# FIG. 6

4/7

## FIG.7

## FIG. 8

## FIG.9

5/7

## FIG. 10

## FIG. 11

6/7

## FIG. 12

## FIG. 13

7/7

## FIG. 14

## FIG. 15

**0041275**

European Patent Office

**EUROPEAN SEARCH REPORT**

Application number

EP 81 10 4275.3

| Category | Citation of document with indication, where appropriate, of relevant passages | Relevant to claim |
|---|---|---|
| P | GB - A - 2 042 051 (NISSAN MOTOR CO.)<br>* claims; page 2, line 66 to page 3, line 33; fig. 3, 4 * | 2,7 |
| A | DE - U1 - 7 801 808 (RACIMEX)<br>* complete document * | |

**DOCUMENTS CONSIDERED TO BE RELEVANT**

**CLASSIFICATION OF THE APPLICATION (Int. Cl.³)**

B 60 K 11/08
F 16 B 41/00

**TECHNICAL FIELDS SEARCHED (Int. Cl.³)**

B 60 K 11/00
B 60 R 13/00
B 60 R 19/00
B 62 D 25/08
F 16 B 5/12
F 16 B 41/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 26-08-1981 | PETTI |

EPO Form 1503.1 06.78